# EUROPEAN PATENT APPLICATION

(11) **EP 4 202 420 A1**
(43) Date of publication of application: **28.06.2023**
(21) Application number: 21857721.1
(22) Date of filing: 19.08.2021
(51) Int. Cl.: G01N 21/76, G01N 33/53, G01N 35/04

(54) **OPERATING METHOD FOR CHEMILUMINESCENCE ANALYZER**

(30) Priority: 20.08.2020 CN 202010842903; 10.12.2020 CN 202011432326
(71) Applicant: Chemclin Diagnostics Co., Ltd., Beijing 100094 (CN)
(72) Inventor: WU, Dongyang, Beijing 100094 (CN); LIAN, Zifu, Shanghai 201210 (CN); LI, Lin, Beijing 100094 (CN)
(74) Representative: Laine IP Oy
(86) International application number: PCT/CN2021/113435
(87) International publication number: WO 2022/037629

(57) **Abstract**

A method for operating a chemiluminescence analyzer (1) comprising a carrier mechanism (70), the method comprising steps of: loading a first reaction vessel on the carrier mechanism (70); adding a sample into the first reaction vessel; moving the carrier mechanism (70) so that the first reaction vessel is located in a reagent dispensing region (A3) and adding a reagent into the first reaction vessel through at least one reagent dispensing mechanism (80, 120); incubating the first reaction vessel on the carrier mechanism (70); and moving the carrier mechanism (70) so that the first reaction vessel is located at a light detection mechanism (150) to perform luminescence detection on the sample in the first reaction vessel.

## Description

### Technical Field

The present invention relates to the technical field of chemiluminescence detection, and in particular to a method for operating a chemiluminescence analyzer. The present invention further proposes a computer readable storage medium.

### Technical Background

Light initiated chemiluminescence assay is a homogeneous immunoassay technique, which can facilitate a rapid and adequate immune response.

Currently, fully automated light initiated chemiluminescence assay devices are commonly used to perform the light initiated chemiluminescence assay. "Fully automated" allows the whole procedure of the assay to be performed without human or external intervention, which helps to ensure the accuracy and efficiency of the assay procedure.

Existing assay devices for fully automated light initiated chemiluminescence assay are designed for large hospitals or medical institutions, aiming to test as many samples as possible (e.g., at least about 100 samples) simultaneously in one assay device. However, this typically requires the assay device to be equipped with multiple (i.e., at least two) incubation trays, which are generally arranged on a table in a manner of being separate from each other. Although such an assay device is capable of handling a very large number of samples simultaneously, each sample must be subjected to a lot of rotational movements on said two incubation trays, and also be transferred therebetween. This renders the processing time for each sample becomes relatively long. In addition, because the assay device consists of many structural members, it is relatively complex and thus prone to errors for these members to cooperate with each other. Therefore, this type of assay device is only suitable for large hospitals confronting to process a large number of samples intensively. However, it is rather inefficient for small hospitals or other small medical institutions that only need to process a relatively small number of samples (e.g., less than 50 samples).

In the prior arts, technical solutions including multiple reagent trays or incubation trays that are arranged coaxially have been also proposed. However, in such technical solutions, the outermost tray will have a very large diameter, thus causing relatively poor stability in its operation, such as the problem of inaccurate positioning. In this case, many structural members would readily suffer problems in mutual cooperation when the fully automated procedure is performed.

### Summary of the Invention

The present invention proposes a method for operating a chemiluminescence analyzer, by which at least one of the problems existing in the prior arts can be solved or at least abated. The present invention further proposes a computer readable storage medium.

According to the present invention, a method for operating a chemiluminescence analyzer comprising a carrier mechanism is proposed, said method comprising steps of: loading a first reaction vessel onto said carrier mechanism; adding a sample to said first reaction vessel; moving said first reaction vessel to a reagent dispensing area, and adding a reagent to said first reaction vessel by means of at least one reagent dispensing mechanism; incubating said first reaction vessel on said carrier mechanism; and moving said first reaction vessel to a light detection mechanism for performing luminescence detection on the sample in said first reaction vessel.

In the above method of the present invention, the reaction vessel is located on the carrier mechanism all the time in the steps from addition of the sample to the luminescence detection. The detection procedure is advanced by rotating the reaction vessel to different sites by the carrier mechanism. Alternatively, the reaction vessel can be transferred to different sites on the carrier mechanism by a mechanical gripper, for performing the luminescence detection. Since the entire assay procedure can be performed on a single carrier mechanism, the structure of the chemiluminescence analyzer can be effectively simplified, thus allowing a significant reduction for the entire chemiluminescence analyzer in terms of size and weight. In addition, cooperation between various structural members becomes easier, and less control errors and mistakes would occur. This chemiluminescence analyzer is ideally suited for fully automated light initiated chemiluminescence assay in small hospitals or small medical institutions with a low level of demand.

In one embodiment, in the step of loading a first reaction vessel onto said carrier mechanism, an empty holding site on said carrier mechanism is moved to a reaction vessel dispensing mechanism so that the first reaction vessel on said reaction vessel dispensing mechanism moves to said empty holding site.

In one embodiment, in the step of adding a sample to said first reaction vessel, said first reaction vessel is moved to a sample dispensing area, where the sample is added to said first reaction vessel through a sample dispensing mechanism.

In one embodiment, in the step of adding a sample to said first reaction vessel, the sample is first moved to a sample site in said sample dispensing area through said sample dispensing mechanism, and then said first reaction vessel is moved to the sample site in said sample dispensing area, where the reagent is added to said first reaction vessel through said sample dispensing mechanism.

In one embodiment, in the step of adding a sample to said first reaction vessel, said first reaction vessel is first moved to a sample site in said sample dispensing area, and then the sample is moved through said sample dispensing mechanism to the sample site in said sample dispensing area, where the reagent is added to said first reaction vessel.

In one embodiment, a plurality of sample sites is arranged in said sample dispensing area, comprising a first sample site and a second sample site, wherein: said first reaction vessel is moved to said first sample site, where a pre-sample is added to said first reaction vessel; said first reaction vessel is then moved to the reagent dispensing area, where a diluent is added to said first reaction vessel to form a diluted sample; and said first reaction vessel is subsequently moved to said second sample site, where said diluted sample is added from said first reaction vessel to a second reaction vessel currently located at said first sample site, as a sample to be tested.

In one embodiment, in the step of adding a reagent to said first reaction vessel, said first reaction vessel is first moved to a first reagent dispensing site in the reagent dispensing area for adding a first reagent to said first reaction vessel, and then said first reaction vessel is moved to a second reagent dispensing site in the reagent dispensing area for adding a second reagent to said first reaction vessel.

In one embodiment, a plurality of said second reagent dispensing sites is provided in said reagent dispensing area, such that said first reaction vessel is located in one of said second reagent dispensing sites for adding a second reagent to said first reaction vessel.

In one embodiment, said first reaction vessel on said carrier mechanism is incubated for a predetermined duration after addition of the first reagent to said first reaction vessel and before addition of the second reagent thereto.

In one embodiment, in the step of adding a reagent to said first reaction vessel, a plurality of first reagents is added to said first reaction vessel at said first reagent dispensing site, wherein said carrier mechanism is moved to said first reagent dispensing site several times, so that one of said plurality of first reagents is added each time when reaching said first reagent dispensing site.

In one embodiment, in the step of adding a reagent to said first reaction vessel, a plurality of first reagents is added to said first reaction vessel at said first reagent dispensing site, said carrier mechanism remaining at said first reagent dispensing site during addition of different first reagents.

In one embodiment, after at least one first reagent and/or second reagent is added to said first reaction vessel, said carrier mechanism is vibrated to mix the sample and reagent in said first reaction vessel, and while said carrier mechanism is vibrating, none of other reaction vessels is added with sample or reagent, and/or performed with luminescence detection.

In one embodiment, said method further comprises step of moving said first reaction vessel to a reaction vessel removing area, where said first reaction vessel is removed from the holding site.

In one embodiment, said carrier mechanism is moved along only one direction, so that said first reaction vessel is moved to at least one of a reaction vessel dispensing area, a sample dispensing area, a reagent dispensing area, a luminescence detecting area and a reaction vessel removing area, said areas being arranged to surround said carrier mechanism.

In one embodiment, said chemiluminescence analyzer further comprises a control system, for controlling at least one of said carrier mechanism, said reaction vessel dispensing mechanism, said sample dispensing mechanism, said reagent dispensing mechanism, said light detecting mechanism and said reaction vessel removing mechanism.

In one embodiment, said chemiluminescence analyzer further comprises a control system, for receiving information about test items, and determining, based on said information, a time point when a kit containing necessary reagent in a reagent tray is moved to the reagent dispensing site.

In one embodiment, said carrier mechanism is configured as a rotatable carrying disc, which is rotatable about its center to move the first reaction vessel located in the holding site.

According to another aspect of the present invention, a computer readable storage medium having a computer program stored thereon is proposed, wherein running the computer program causes execution of the above mentioned method. The storage medium may be, for example, a memory card, a USB stick, a CD-ROM, a DVD, etc. The storage medium can be fixed in the chemiluminescence analyzer, for example, as part of the control system of the chemiluminescence analyzer. Of course, the storage media can also be connected to the chemiluminescence analyzer temporarily, for transmission of the computer program.

### Brief Description of the Drawings

In the following the present invention will be described in more detail with reference to the accompanying drawings, in which:
Fig. 1 schematically shows a top view of a chemiluminescence analyzer comprising a carrier mechanism according to an embodiment of the present invention; and
Fig. 2 schematically shows a top view of a chemiluminescence analyzer comprising a carrier mechanism according to another embodiment of the present invention.

In the drawings, the same reference numerals indicate the same components, respectively. The drawings are not necessarily drawn to actual scale.

### Detailed Description of the Invention

In the following the present invention will be further described with reference to the accompanying drawings.

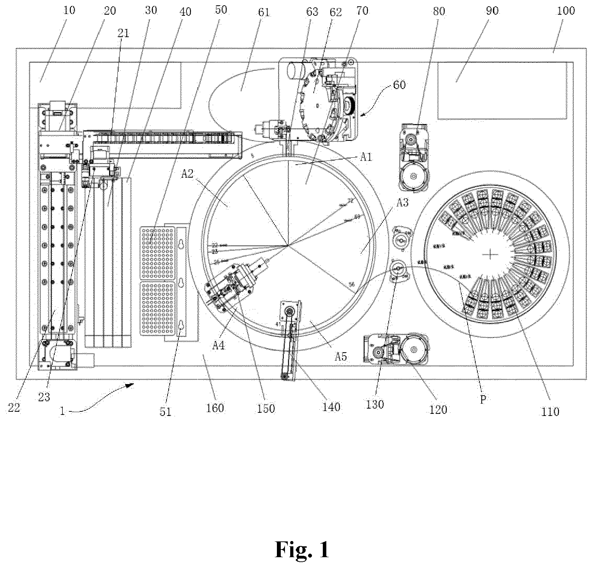

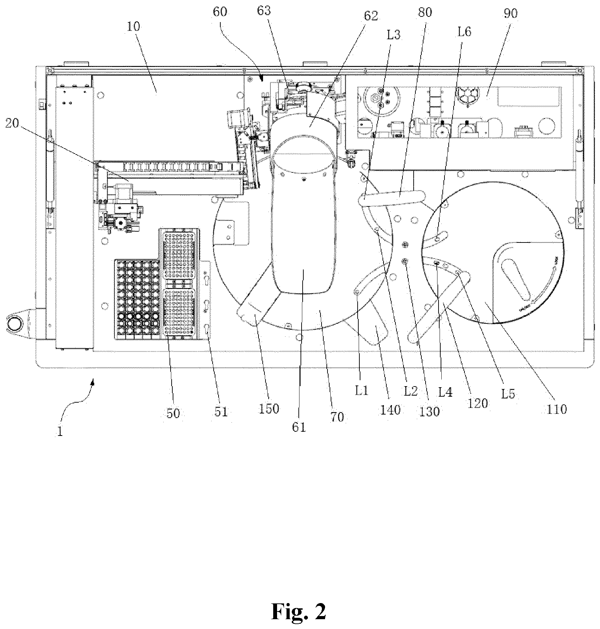

Figs. 1 and 2 each schematically show a chemiluminescence analyzer 1 (hereinafter referred to as "analyzer"), which can be used in particular for fully automated light initiated chemiluminescence assay, according to the present invention.

As shown in Figs. 1 and 2, the analyzer 1 comprises a frame 160 for supporting other structural members of the analyzer 1. One rotatable carrier mechanism 70 that is capable of rotating about its own center is provided on the frame 160. The analyzer 1 may further include a sample dispensing mechanism 20, a reaction vessel dispensing mechanism 60, a reagent tray (e.g., a reagent tray 110) for holding the reagents to be used, at least one reagent dispensing mechanism (e.g., two reagent dispensing mechanisms 80 and 120), a light detection mechanism 150, and a reaction vessel removing mechanism 140, all of which are disposed on the frame 160 in a manner of surrounding said one carrier mechanism 70. By mean of arrangement of these structural members surrounding the carrier mechanism 70, different areas are formed in different parts of the carrier mechanism 70. For example, a reaction vessel dispensing area A1 is formed by a part of the carrier mechanism 70 corresponding to the reaction vessel dispensing mechanism 60. A sample dispensing area A2 is formed by a part of the carrier mechanism 70 corresponding to the sample dispensing mechanism 20 (and the reagent tray 110). A reagent dispensing area A3 is formed by a part of the carrier mechanism 70 corresponding to the reagent dispensing mechanisms 80 and 120. A luminescence detecting area A4 is formed by a part of the carrier mechanism 70 corresponding to the light detection mechanism 150. A reaction vessel removing area A5 is formed by a part of the carrier mechanism 70 corresponding to the reaction vessel removing mechanism 140.

It should be understood that all the above areas will not be changed during the rotation of the carrier mechanism 70.

The sample dispensing mechanism 20 described above includes a dispenser 23, which can draw up liquid and move relatively freely within a certain range. Sample holders for receiving samples, such as a general sample holder 30 and a priority sample holder 40 as shown in Fig. 1, may be provided within this range. The priority sample holder may be used, for example, for receiving emergency samples. In addition, a tip holder 50 for holding disposable tips may also be provided within this range. The tip holder 50 may also include a tip discarding area 51. Moreover, the above sample dispensing area A2 is also arranged within this range of movement of the dispenser.

A plurality of sample sites may be provided within the above sample dispensing area A2, in order to obtain diluted samples to be tested, which will be described in more detail in combination with its method in the following.

The analyzer 1 further includes a first reagent dispensing mechanism 120 and a second reagent dispensing mechanism 80. The first reagent dispensing mechanism 120 may be used, for example, to dispense a reagent specific for use in a single assay, which is referred to herein as "a first reagent". The second reagent dispensing mechanism 80 may be used, for example, to dispense a reagent that are required for different assays, which is referred to herein as "a second reagent". It should be noted here that said first and second reagents are used to indicate the functions of the first and second reagent dispensing mechanisms only, but should not be construed as restricting the usage of the first and second reagents themselves. The first and second reagents can be prepared according to the requirement of the user.

Referring to Fig. 2, a first reagent dispensing site L1 is formed in an area where the carrier mechanism 70 overlaps with a reagent dispensing path of the first reagent dispensing mechanism 120. Correspondingly, first reagent pickup sites, such as first reagent acquisition sites L4 and L5, is formed in an area where the reagent tray 110 overlaps with the reagent dispensing path of the first reagent dispensing mechanism 120. After the carrier mechanism 70 is rotated to a state in which a first reaction vessel is located at the first reagent dispensing site L1, the first reagent dispensing mechanism 120 picks up a respective first reagent from at least one of the first reagent pickup sites L4 and L5. Then, the first dispensing mechanism 120 moves to the first reagent dispensing site L1, and adds the first reagent to the first reaction vessel there.

In addition, second reagent dispensing sites, such as second reagent dispensing sites L2 and L3, are formed in an area where the carrier mechanism 70 overlaps with the reagent dispensing path of the second reagent dispensing mechanism 80. Accordingly, a second reagent pickup site L6 is formed in an area where the reagent tray 110 overlaps with the reagent dispensing path of the second reagent dispensing mechanism 80. After the carrier mechanism 70 is rotated to a state in which the first reaction vessel is located at one of the second reagent dispensing sites L2 and L3, the second reagent dispensing mechanism 80 picks up a respective second reagent from the second reagent pickup site L6. Then, the second reagent dispensing mechanism 80 moves to the corresponding first reagent dispensing site, and adds the second reagent to the first reaction vessel there.

In a preferred embodiment, a cleaning mechanism 130 for cleaning the reagent dispenser is provided between the reagent tray 110 and the carrier mechanism 70.

In addition, as shown in Figs. 1 and 2, the analyzer 1 includes a control module 10. This control module 10 can be used to control the working procedure of various structural members of the analyzer 1, in order to implement the entire assay method (described in detail below). For example, the user can control the control module 10 (i.e., a middle computer) via a separate computer (i.e., an upper computer), in order to implement the above-mentioned working procedure. The computer and the control module 10 are configured with storage medium for storing computer programs for executing the method of operating the analyzer 1 and the carrier mechanism 70.

As an alternative, the user may directly operate the control module 10 to implement the above-mentioned working procedure.

Moreover, as shown in Figs. 1 and 2, a flow path module 90 is arranged in the upper right portion of the entire analyzer 1. The flow path module 90 can be used, for example, to supply cleaning fluid to the cleaning mechanism 130 and to discharge waste fluid from the cleaning mechanism 130, thereby ensuring the accuracy of the assay.

The method of operation of the analyzer 1 and the carrier mechanism 70 therein according to the invention will be described below in connection with Figs. 1 and 2. The operation method may be one for achieving fully automated light initiated chemiluminescence assay.

For a single assay procedure, first of all, a first reaction vessel is loaded onto the carrier mechanism 70, and a sample is added to the first reaction vessel.

Specifically, in this step, the dispenser 23 of the sample dispensing mechanism 20 is first moved to the tip holder 50, such that a disposable tip arranged on the tip holder 50 is mounted to the dispenser 23. Then, the dispenser 23 is moved to the sample rack (including the general sample rack 30 and the priority sample rack 40), where a corresponding sample is collected. Thereafter, the dispenser 23 carrying with the sample is moved to the sample dispensing area A2 of the carrier mechanism 70, and may be positioned, for example, at a predetermined point. Corresponding to the above movement, the reaction vessel dispensing mechanism 60 loads a first reaction vessel into an empty holding site on the carrier mechanism 70, which is located in the reaction vessel dispensing area A1. The carrier mechanism 70 is rotated so that the first reaction vessel is rotated from the reaction vessel dispensing area A1 to the predetermined point in the sample dispensing area A2, which is under the dispenser 23. As a result, the dispenser 23 can add the sample to the first reaction vessel.

Moreover, the sample added to the first reaction vessel from the sample rack may be a pre-sample. For example, the carrier mechanism 70 may be first rotated so that the first reaction vessel is located at a first sample site, whereby a pre-sample (i.e., an undiluted sample) from the sample rack is added to the first reaction vessel by means of the sample dispensing mechanism 20. The carrier mechanism is then rotated so that the first reaction vessel is located in the reagent dispensing area A3, whereby a reagent as diluent is added to the first reaction vessel, thus obtaining a diluted sample in the first reaction vessel. Thereafter, the carrier mechanism 70 can be further rotated so that the first reaction vessel is located at the second sample site, whereby the diluted sample in the first reaction vessel can be added to another empty reaction vessel currently located at the first sample site by means of the sample dispensing mechanism 20, thus forming the sample to be tested. In this manner, it is unnecessary to provide a separate sample diluting device.

It should be understood that, depending on the dilution ratio as required, multiple dilution operations can be performed between the first sample site and the second sample site to obtain the sample to be tested.

After the sample is added to the first reaction vessel, the carrier mechanism 70 is further rotated so that the first reaction vessel moves from the sample dispensing area A2 to the reagent dispensing area A3, whereby corresponding reagents can be added to the first reaction vessel by means of the reagent dispensing mechanisms 80, 120.

Specifically, in this step, the carrier mechanism 70 is rotated so that the first reaction vessel is moved to the first reagent dispensing site L1 in the reagent dispensing area A3. At the same time, the reagent tray 110 delivers the first reagent currently to be added to the first reagent pickup site L4 or L5. As a result, the first reagent dispensing mechanism 120 can pick up the corresponding first reagent from the first reagent pickup site L4 or L5 and add it to the first reaction vessel at the first reagent dispensing site L1. Thereafter, the carrier mechanism 70 is further rotated, so that liquid in the first reaction vessel is heated and incubated while the other reaction vessels are moved to respective positions for corresponding operation steps. After a period of time, the carrier mechanism 70 is rotated until the first reaction vessel returns to the first reagent dispensing site L1. Accordingly, the reagent tray 110 delivers a further first reagent to be added to the first reagent pickup site L4 or L5. Thus, the first reagent dispensing mechanism 120 may pick up said further first reagent from the first reagent pickup site L4 or L5, and add it to the first reaction vessel at the first reagent dispensing site L1. It should be understood that the first reagent dispensing mechanism 120 may be cleaned by the cleaning mechanism 130 in between two additions of different first reagents through the first reagent dispensing mechanism 120.

As an alternative, the carrier mechanism 70 may also be kept stationary during the additions of different first reagents. That is, the first reagent dispensing mechanism adds different first reagents as desired to the first reaction vessel while the first reaction vessel on the carrier mechanism 70 is in the first reagent dispensing site for a predetermined length of time.

Thereafter, the carrier mechanism 70 is rotated again for a period of time, e.g., 6, 8, or 12 revolutions, etc. During this time, liquid in the first reaction vessel is heated and incubated by the carrier mechanism 70, and the other reaction vessels of the carrier mechanism 70 can be moved to respective positions for corresponding operation steps. Thereafter, he carrier mechanism 70 is rotated such that the first reaction vessel is moved to the second reagent dispensing site L2 or L3. The second reagent dispensing site can be selected depending on the test item information. After obtaining the test item information, the analyzer calculates the duration of the test item, and selects the second reagent dispensing site according to the corresponding duration of the test item. For example, the second reagent dispensing site L2 can be used for a routine test item of 20 minutes, while the second reagent dispensing site L3 can be used for a rapid test item of 15 minutes. In this manner, with the selection of the second reagent dispensing site, it can avoid conflicts in test items due to the same duration and the same moving path. In conventional analyzers, the speed and transfer distance of the reaction tray are fixed. If a fast test item (e.g., an emergency item) is to be performed superiorly, subsequent test items must be stopped or delayed. However, in the analyzer of the present invention, through providing a plurality of second reagent dispensing sites, it is possible to achieve flexible assay time arrangement, with no or little interferences with other items to be tested.

At the same time, the reagent tray 110 delivers the second reagent to be added to the second reagent pickup site L6. As a result, the second reagent dispensing mechanism 80 can pick up the corresponding second reagent from the second reagent pickup site L6, and add it to the first reaction vessel at the second reagent dispensing site L2 or L3.

Here, the reaction vessel and the reagent dispensing mechanisms 120, 80 can arrive at respectively positions simultaneously. Alternatively, the reagent dispensing mechanisms 120, 80 can be moved to a particular position after the reaction vessel reaches said particular position, and vice versa.

After the addition of one or more reagents, the first reaction vessel containing the sample and reagents already is incubated on the carrier mechanism 70 for a predetermined length of time. During the incubation of the first reaction vessel, no operations will be performed on the first reaction vessel by respective mechanisms, e.g. no sample/reagent addition and no luminescence detection.

While the first reaction vessel is incubated, the carrier mechanism 70 may be vibrated, thereby facilitating the mixing of the sample and reagents in the first reaction vessel. The above vibration may be a rotational vibration of the carrier mechanism 70, for example, generated by reciprocal rotations of the carrier mechanism 70 with small amplitude but high frequency.

It should be understood that while the first reaction vessel is being incubated, other empty holding sites on the carrier mechanism may receive additional reaction vessels, which may also undergo operations of addition of samples and reagents, luminescence detection, and removal. Preferably, when the carrier mechanism 70 is vibrated, these additional reaction vessels are not operated simultaneously for addition of samples and reagents, luminescence detection and removal, in order to avoid problems such as spilling of samples and reagents, interferences between structural parts, operation failure or the like.

After incubation of the first reaction vessel, the carrier mechanism 70 is rotated so that the first reaction vessel is moved to the luminescence detecting area A4, and is located at a position below the light detection mechanism 150. Thus, the sample in the first reaction vessel can be detected by the light detection mechanism 150.

After the luminescence detection, the carrier mechanism 70 is further rotated so that the first reaction vessel is moved to the reaction vessel removing area A5, where the first reaction vessel is removed from the holding site by the reaction vessel removing mechanism 140, thus leaving an empty holding site for subsequent use. In a preferred embodiment, after the luminescence detection is performed on the first reaction vessel, the carrier mechanism 70 is rotated until the first reaction vessel is moved directly to the reaction vessel removing area A5.

In the above steps, the carrier mechanism 70 is preferably rotated along only one direction (ignoring rotational vibrations), for example, along a counterclockwise direction, so that the first reaction vessel will be moved among the reaction vessel dispensing area A1, the sample dispensing area A2, the reagent dispensing area A3, the luminescence detecting area A4 and the reaction vessel removing area A5. This simplifies the manipulation of the carrier mechanism. With the aforementioned manipulation steps of the present application in combination with the unidirectional rotation of the carrier mechanism, an extremely flexible arrangement of test items, especially a mixed arrangement of test items of conventional duration and rapid test items, can be achieved.

The above steps can be performed consecutively, or an operation step concerning another reaction vessel can be inserted therebetween. For example, after the sample is added to the first reaction vessel and before the reagent is added, other reaction vessels can be added with sample or reagent, or other operations can be performed.

While the first reaction vessel is not moved to a corresponding operation position (e.g., the first reagent dispensing site), the other reaction vessels located on the carrier mechanism 70 may be located at corresponding operation positions for corresponding operations (e.g., adding sample, adding reagent, performing luminescence detection, etc.). Alternatively, while the first reaction vessel is in a corresponding operating position, other reaction vessels may also be located in other operating positions so that different operations can be performed simultaneously.

As a result, one single assay can be completed for the first reaction vessel during multiple rotations of the carrier mechanism 70. In this procedure, the first reaction vessel can be incubated sufficiently, which is conducive to the accuracy and effectiveness of the assay. At the same time, other reaction vessels can be operated in a timely and efficient manner, thus enabling multiple (e.g., 50) reaction vessels to be operated on the carrier mechanism 70 at the same time. As a result, the positions of the entire carrier mechanism can be utilized to a maximized degree, allowing the carrier mechanism 70 to be compact while achieving high throughput detection.

With the above method, the analyzer 1 can achieve fully automated light initiated chemiluminescence assay by simplifying the scheduling control relationship between the various structural members as much as possible, enabling the assay procedure more efficient and faster, and also less prone to errors or mistakes.

In the context, the reaction vessel may be, for example, test tube or reaction cup.

Although the present invention has been described with reference to preferred embodiments, various improvements can be made and components thereof can be replaced with equivalents without departing from the scope of the present invention. In particular, various technical features mentioned in various embodiments can be combined in any manner, provided that there is no structural conflict. The present invention is not limited to the particular embodiments disclosed in the description, but includes all technical solutions that fall within the scope of the claims.

## Claims

1. A method for operating a chemiluminescence analyzer comprising a carrier mechanism, said method comprising steps of:
loading a first reaction vessel onto said carrier mechanism;
adding a sample to said first reaction vessel;
moving said first reaction vessel to a reagent dispensing area, and adding a reagent to said first reaction vessel by means of at least one reagent dispensing mechanism;
incubating said first reaction vessel on said carrier mechanism; and
moving said first reaction vessel to a light detection mechanism for performing luminescence detection on the sample in said first reaction vessel.

2. The method for operating a chemiluminescence analyzer according to claim 1, **characterized in that** in the step of loading a first reaction vessel onto said carrier mechanism, an empty holding site on said carrier mechanism is moved to a reaction vessel dispensing mechanism so that the first reaction vessel on said reaction vessel dispensing mechanism moves to said empty holding site.

3. The method for operating a chemiluminescence analyzer according to claim 2, **characterized in that** in the step of adding a sample to said first reaction vessel, said first reaction vessel is moved to a sample dispensing area, where the sample is added to said first reaction vessel through a sample dispensing mechanism.

4. The method for operating a chemiluminescence analyzer according to claim 3, **characterized in that** in the step of adding a sample to said first reaction vessel, the sample is first moved to a sample site in said sample dispensing area through said sample dispensing mechanism, and then said first reaction vessel is moved to the sample site in said sample dispensing area, where the reagent is added to said first reaction vessel through said sample dispensing mechanism.

5. The method for operating a chemiluminescence analyzer according to claim 3, **characterized in that** in the step of adding a sample to said first reaction vessel, said first reaction vessel is first moved to a sample site in said sample dispensing area, and then the sample is moved through said sample dispensing mechanism to the sample site in said sample dispensing area, where the reagent is added to said first reaction vessel.

6. The method of operating a chemiluminescence analyzer according to any one of claims 3 to 5, **characterized in that** a plurality of sample sites is arranged in said sample dispensing area, comprising a first sample site and a second sample site,
wherein said first reaction vessel is moved to said first sample site, where a pre-sample is added to said first reaction vessel;
said first reaction vessel is then moved to the reagent dispensing area, where a diluent is added to said first reaction vessel to form a diluted sample; and
said first reaction vessel is subsequently moved to said second sample site, where said diluted sample is added from said first reaction vessel to a second reaction vessel currently located at said first sample site, as a sample to be tested.

7. The method for operating a chemiluminescence analyzer according to any one of claims 1 to 6, **characterized in that** in the step of adding a reagent to said first reaction vessel, said first reaction vessel is first moved to a first reagent dispensing site in the reagent dispensing area for adding a first reagent to said first reaction vessel, and then said first reaction vessel is moved to a second reagent dispensing site in the reagent dispensing area for adding a second reagent to said first reaction vessel.

8. The method for operating a chemiluminescence analyzer according to claim 7, **characterized in that** a plurality of said second reagent dispensing sites is provided in said reagent dispensing area, such that said first reaction vessel is located in one of said second reagent dispensing sites for adding a second reagent to said first reaction vessel.

9. The method for operating a chemiluminescence analyzer according to claim 7 or 8, **characterized in that** said first reaction vessel on said carrier mechanism is incubated for a predetermined duration after addition of the first reagent to said first reaction vessel and before addition of the second reagent thereto.

10. The method of operating a chemiluminescence analyzer according to any one of claims 7 to 9, **characterized in that** in the step of adding a reagent to said first reaction vessel, a plurality of first reagents is added to said first reaction vessel at said first reagent dispensing site, wherein said carrier mechanism is moved to said first reagent dispensing site several times, so that one of said plurality of first reagents is added each time when reaching said first reagent dispensing site.

11. The method of operating a chemiluminescence analyzer according to any one of claims 7 to 9, **characterized in that** in the step of adding a reagent to said first reaction vessel, a plurality of first reagents is added to said first reaction vessel at said first reagent dispensing site, said carrier mechanism remaining at said first reagent dispensing site during addition of different first reagents.

12. The method for operating a chemiluminescence analyzer according to any one of claims 1 to 11, **characterized in that** after at least one first reagent and/or second reagent is added to said first reaction vessel, said carrier mechanism is vibrated to mix the sample and reagent in said first reaction vessel, and
while said carrier mechanism is vibrating, none of other reaction vessels is added with sample or reagent, and/or performed with luminescence detection.

13. The method for operating a chemiluminescence analyzer according to any one of claims 1 to 12, **characterized in that** said method further comprises step of:
moving said first reaction vessel to a reaction vessel removing area, where said first reaction vessel is removed from the holding site.

14. The method of operating a chemiluminescence analyzer according to any one of claims 1 to 13, **characterized in that** said carrier mechanism is moved along only one direction, so that said first reaction vessel is moved to at least one of a reaction vessel dispensing area, a sample dispensing area, a reagent dispensing area, a luminescence detecting area and a reaction vessel removing area, said areas being arranged to surround said carrier mechanism.

15. The method for operating a chemiluminescence analyzer according to any one of claims 1 to 14, **characterized in that** said chemiluminescence analyzer further comprises a control system, for controlling at least one of said carrier mechanism, said reaction vessel dispensing mechanism, said sample dispensing mechanism, said reagent dispensing mechanism, said light detecting mechanism and said reaction vessel removing mechanism.

16. The method for operating a chemiluminescence analyzer according to any one of claims 1 to 15, **characterized in that** said chemiluminescence analyzer further comprises a control system, for receiving information about test items, and determining, based on said information, a time point when a kit containing necessary reagent in a reagent tray is moved to the reagent dispensing site.

17. A method for operating a chemiluminescence analyzer according to any one of claims 1 to 16, **characterized in that** said carrier mechanism is configured as a rotatable carrying disc, which is rotatable about its center to move the first reaction vessel located in the holding site.

18. A computer readable storage medium having a computer program stored thereon, wherein running the computer program causes execution of the method according to in any one of claims 1 to 17.
